# EUROPEAN PATENT APPLICATION

(11) **EP 2 096 598 A2**
(43) Date of publication of application: **02.09.2009**
(21) Application number: 09153306.7
(22) Date of filing: 20.02.2009
(51) Int. Cl.: G06Q 30/00

(54) **Receptive opportunity presentation of activity-based advertising**

(30) Priority: 04.04.2008 US 62812; 28.02.2008 US 32421 P
(71) Applicant: Palo Alto Research Center Incorporated, Palo Alto, California 94304 (US)
(72) Inventor: Greene, Daniel H., Sunnyvale, CA 94087 (US); Partridge, Kurt, Palo Alto, CA 94306 (US); Begole, James, San Jose, CA 95129 (US)
(74) Representative: Grünecker, Kinkeldey, Stockmair & Schwanhäusser Anwaltssozietät

(57) **Abstract**

One embodiment of the present invention provides a system that facilitates presentation of activity-based advertising based on receptive opportunities. During operation, the system identifies a number of topics. The system then receives a number of advertisements from advertisers, wherein a respective advertisement is associated with a topic. For a respective topic, the system determines a number of candidate advertisements associated with that topic to be pending presentations. The system further analyzes an activity in which a customer is engaged. Next, the system identifies a receptive opportunity to present one or more advertisements to the customer based on the activity analysis. The system then determines among the pending presentations one or more advertisements to present to the customer during the identified receptive opportunity. Subsequently, the system presents the determined advertisements to the customer during the opportunity period.

## Description

### BACKGROUND

This disclosure generally relates to advertising systems. In particular, this disclosure relates to presenting advertisements based on receptive opportunities and a customer's activities.

The ubiquitous Internet connectivity coupled with wide deployment of wireless devices is drastically changing the advertising industry. Of the $385 billion spent globally on advertising in 2005, online and wireless spending accounted for $19 billion. Internet advertising was the fastest-growing form of advertisement, with a cumulative annual growth rate of 18.1 percent. However, Internet advertising has its limitations, and new opportunities remain to be discovered to sustain the dramatic rate of growth in new media advertising.

Existing Internet advertisements only work when a user is online and watching a computer screen. Traditional advertising, in contrast, comes in many forms. For example, signs can advertise products inside retail stores. Radio programs can advertise products when the listener engages in a wide variety of activities. Printed advertisements can appear anywhere paper is used, from newspapers, to flyers, receipts, and ticket stubs. Although Internet advertising surpasses traditional advertising in its ability to better target consumer interest, it still cannot be closely tailored to human activities.

Recently, online advertising companies have begun to expand into more traditional advertising channels. They have applied the auctioning mechanisms that have succeeded in placing advertisements online to other media, such as newspapers and radio. However, these media channels are mass media channels poorly targeted to individual customers' interests.

### BRIEF DESCRIPTION OF THE FIGURES

The disclosure herein is illustrated by way of example, and not by way of limitation, in the figures of the accompanying drawings and in which like reference numerals refer to similar elements.

FIG. 1 illustrates an exemplary architecture for a receptive-opportunity-based advertising system, in accordance with an embodiment of the present invention.

FIG. 2 presents a block diagram illustrating an exemplary mode of operation of a receptive-opportunity-based advertising system, in accordance with an embodiment of the present invention.

FIG. 3 presents a flowchart illustrating an exemplary process of receiving advertiser's bids, identifying a receptive opportunity, and presenting advertisements, in accordance with an embodiment of the present invention.

FIG. 4 presents a flowchart illustrating the operation of a customer's mobile device, in accordance with an embodiment of the present invention.

FIG. 5 illustrates an exemplary computer system that facilitates an advertising system based on receptive opportunities, in accordance with an embodiment of the present invention.

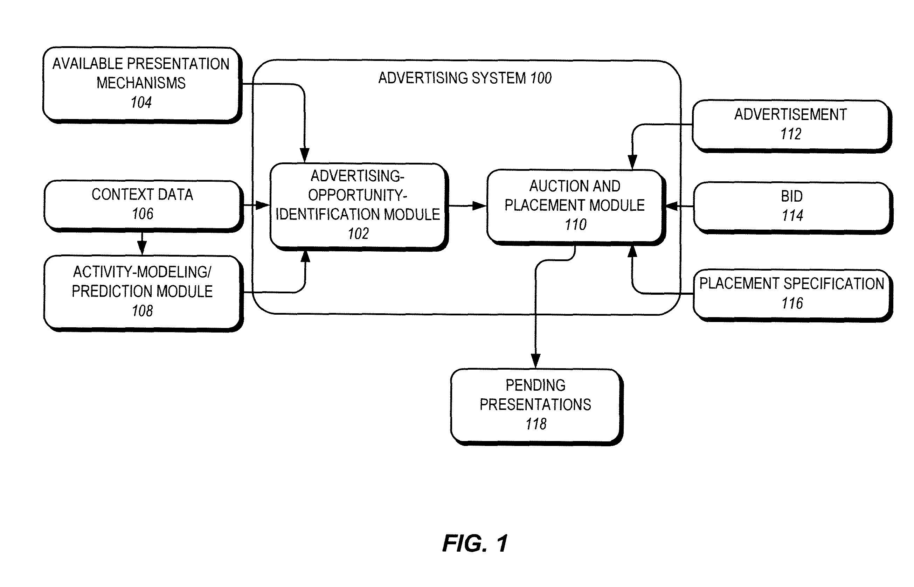

In the drawings, the same reference numbers identify identical or substantially similar elements or acts. The most significant digit or digits in a reference number refer to the figure number in which that element is first introduced. For example, element 102 is first introduced in and discussed in conjunction with FIG. 1.

### SUMMARY

One embodiment of the present invention provides a system that facilitates presentation of activity-based advertising during receptive opportunities. During operation, the system identifies a number of topics. The system then receives a number of advertisements from advertisers, wherein a respective advertisement is associated with a topic. For a respective topic, the system determines a number of candidate advertisements associated with that topic to be pending presentations. The system further analyzes an activity in which a customer is engaged. Next, the system identifies a receptive opportunity to present one or more advertisements to the customer based on the activity analysis. The system then determines among the pending presentations one or more advertisements to present to the customer during the identified receptive opportunity. Subsequently, the system presents the determined advertisements to the customer during the opportunity period.

In a variation of this embodiment, determining the candidate advertisements to be pending presentations comprises receiving a number of bids from corresponding advertisers and selecting a predetermined number of top-ranking bids.

In a variation of this embodiment, identifying the receptive opportunity includes evaluating one or more of the following: time of day, day of week, weather condition, the customer's location, speed of the customer's motion, content of the customer's calendar, messages, and emails, history of the customer's activities, and the customer's previous response to advertisements.

In a variation of this embodiment, determining the advertisements to be presented to the customer during the receptive opportunity involves evaluating one or more of the following factors: the bid amount offered by the advertiser who provides a respective advertisement; time of the receptive opportunity relative to the time associated with the topic corresponding to a respective advertisement; the mix of different topics corresponding to the advertisements to be presented; and the customer's past experience with a respective advertisement.

In a variation of this embodiment, presenting the determined advertisements to the customer comprises presenting an advertisement in audio, visual, or textual format on one or more of: a mobile phone, a personal digital assistant (PDA), a computer, a public display, a navigation system, and an audio system.

In a variation of this embodiment, the system charges an advertiser whose advertisement is presented during the receptive opportunity based on the quality of that receptive opportunity.

In a variation of this embodiment, the system downloads the advertisements to be presented from a server.
In one embodiment of the computer system of claim 15, while determining the candidate advertisements to be pending presentations, the determination mechanism is configured to receive a number of bids from corresponding advertisers and select a predetermined number of top-ranking bids.
In a further embodiment, while identifying the receptive opportunity, the opportunity-identification mechanism is configured to evaluate one or more of the following:
time of day;
day of week;
weather condition;
the customer's location;
speed of the customer's motion;
content of the customer's calendar, messages, and emails;
history of the customer's activities; and
the customer's previous response to advertisements.
In a further embodiment, while determining the advertisements to be presented to the customer during the receptive opportunity, the presentation selection mechanism is configured to evaluate one or more of the following factors:
the bid amount offered by the advertiser who provides a respective advertisement;
time of the receptive opportunity relative to the time associated with the topic corresponding to a respective advertisement;
the mix of different topics corresponding to the advertisements to be presented; and
the customer's past experience with a respective advertisement.
In a further embodiment the presentation mechanism is:
a mobile phone;
a personal digital assistant (PDA);
a computer;
a public display;
a navigation system; or
an audio system.
In a further embodiment the computer system further comprises a payment-collection mechanism configured to charge an advertiser whose advertisement is presented during the receptive opportunity based on the quality of that receptive opportunity.

### DETAILED DESCRIPTION

The following description is presented to enable any person skilled in the art to make and use the invention, and is provided in the context of a particular application and its requirements. Various modifications to the disclosed embodiments will be readily apparent to those skilled in the art, and the general principles defined herein may be applied to other embodiments and applications without departing from the spirit and scope of the present invention. Thus, the present invention is not limited to the embodiments shown, but is to be accorded the widest scope consistent with the principles and features disclosed herein.

Embodiments of the present invention provide an advertising system that presents advertisements based on receptive opportunities with respect to a customer's activities. In one embodiment, the system targets advertising to mobile customers (e.g., via cell phones, personal digital assistants (PDAs), and in some cases nearby electronic billboards). The system determines the current activity of the customer, and, when appropriate, delivers activity-targeted advertising that can influence the customer's future purchase behavior. For example, the system might deliver an advertisement for a nearby restaurant to a customer's cell phone at just the time the customer is deciding where to have dinner. In general, system assesses the customer's current contexts, predicts the customer's future decisions (e.g., that the customer usually visits a restaurant after leaving the train), identifies good opportunities to present the advertising (e.g., while the customer is waiting for the train), and presents the customer with relevant and useful advertising.

Embodiments of the present invention can be considered as the juncture of computer science and economics. In particular, the advertising system described herein couples the decision mechanisms - which determine when, where, and how to deliver advertising - with the business models and economic mechanisms that create the right incentives for all parties using the system. Note that, without losing generality, the parties using the system can be (1) the customers, (2) the advertisers, and (3) the operator of the system functioning as a broker of advertising opportunities between advertisers and customers, which is referred to as "advertising provider" or "provider" in this disclosure. This integrated approach involves linking the decision mechanisms that analyze a customer's activity to an auction mechanism that allows advertisers to compete to present advertisements to customers.

This disclosure uses the following terminologies:

*Advertiser*. This term typically refers to a company wishing to advertise its service or products. This disclosure uses the terms "advertiser" and "advertisement broadly to refer to content provider and content, where, for example, the content provider is willing to pay to have targeted content delivered to customers, even if that content does not advertise a specific service or product. The typical advertiser would like to maximize profit, where advertising is one of the costs. For this reason, well-targeted advertising is more effective for advertisers.

*Customer*. This term refers to a recipient of the advertising - a potential customer of the advertisers. Customers typically welcome some advertisements but prefer not to receive other kinds of advertisements. For this reason, well-targeted advertising is more acceptable for customers. This disclosure uses the term "customer" broadly to include people who receive content, even if that content is not meant to include to the person as a customer of the advertiser.

*Provider*. This term refers to the provider of the service that delivers advertisements to customers. The provider is responsible for delivering well-targeted advertising. Embodiments of the present invention provide the technology that a provider can use to deliver advertisements based on a customer's activity and context. In some embodiments, there can be a separate *publisher* who provides the channels for presentation to the customer. The *provider* can choose the advertisements and the publisher's channel, and, depending on the payment mechanism, charges the advertiser and rewards the publisher.

*Presentation*. This term refers to the showing of an advertisement to a customer. Note that embodiments of the present invention are independent from the form of the presentation. Presentation might include adding a banner or pop-up to a PDA or cell phone, playing an audio message by phone, music player, or car stereo, modifying a map on a GPS navigation device, or changing a billboard near the customer.

*Payment*. This term refers to the amount an advertiser pays the provider after a "successful" presentation. Successful presentations can be defined in many different ways. Correspondingly, the payment can also be structured differently. It could be pay-per-presentation, pay-per-click, or pay-per-action (a form of commission defined by the advertiser). In one embodiment, a new pay-per-confirmed-prediction payment structure is used for activity-based advertising.

*Activity*. This term refers to the activity of the customer. For example, a customer's activity might be "walking toward a train station." The activity can be described at different semantic levels. For example, "walking toward a train station" might also be described as "commuting home after work." In the advertising system in accordance with some embodiments, the activity may be partially described with objectives, such as "to obtain exercise," tools, such as "with a bicycle," skill levels, such as "expert," and other modifiers/qualifiers of the activity. Activity-targeting or activity-based advertising may rely on complete or partial descriptions on different semantic levels to facilitate reaching large numbers of relevant activities.

*Context*. This term refers to additional information surrounding the customer's activity. For example, the activity might be occurring on a rainy day. In some embodiments, both the activity description and the context description are used for activity-based presentation of advertisements. Note that the term "context" if often used in conjunction with terms related to activities. The terms "activity," "activity targeting," and "activity-based advertising" are typically used in a way that involves features of the activity as well as possible additional context for targeting the advertising.

In some embodiments of the present invention, the presentation of activity-based advertising involves both topic and opportunity. For example, the topic can be baseball merchandise for baseball fans, while the opportunity can be vehicles stopped in traffic jam leaving the baseball stadium. For another example, the topic can be restaurants in Yokohama, while the opportunity can be waiting for a train in the Tokyo station. In conventional keyword-search-based advertising, the topic is determined by the user's inputted keyword(s), and the opportunity is the time of the search query. However, in activity-based advertising, there may be separation between the identification of the topic and the identification of the opportunity. The identification of the topic can be inferred from an activity, such as watching a baseball game. Other context can be used in identifying the topic, and the topic can be based on a predicted future activity. Likewise, the identification of opportunity can be based on a variety of information, including but not limited to: (1) inferred activity, such as waiting in a traffic jam, (2) other context, such as the customer is with friends, and/or (3) the availability of channels for advertising presentation.

One approach to activity-based advertising can be a system that senses a user's current activity or context, and presents a relevant advertisement based on this context. For example, a baseball fan might receive advertisements for baseball merchandise while at the game. However, this approach may not be optimal under some circumstances. For example, when the same fan is in a subsequent traffic jam, this may also be a good opportunity for presentation of baseball merchandise. However, at this later opportunity there may be additional advertising topics, such as carpool services, public transportation, GPS navigation devices, and places where one can eat with other fans after a baseball game.
These additional topics can compete for the same opportunity.

In some embodiments, the topic or topics for a particular opportunity are chosen by balancing the interests of all participating parties. Customers prefer topics related to their wants, needs, and interests. Advertisers want their topics placed in front of the most receptive customers, for the cheapest price. Providers want to maximize their revenue while preserving their reputation of satisfying both the customer and the advertiser. The present activity-based advertising system provides an effective platform for negotiating and aligning the interests of all three parties.

Note that some opportunities are more appropriate for certain topics than others are, and some opportunities may not be appropriate for advertising at all. Customers engaged in a particular task, such as calling a friend to deliver some important news, would not be receptive to advertisements. Customers are most receptive when they are engaged in a "waiting" activity, such as when they are idle, or when they are otherwise engaged in reflective behavior. The opportunity also affects the user's preferred topics, although as described above, the relationship is often not a direct one. A customer might prefer a topic related to their overall interests, or they might prefer a topic related to their current context, a recent context, or an upcoming context. A provider has the best chance at finding an appropriate topic by examining a rich set of data that describes the customer's previous behaviors and preferences.

Embodiments of the present invention target advertising to a customer by considering both topic and opportunity. While it is possible to base a system on advertisers bidding on both topic and opportunity jointly, some embodiments of the present invention use a factored approach, where advertisers bid first on topics, optionally with some broad constraints about the opportunity, and then the provider uses a selection mechanism to determine the opportunities used to make the presentations. This factored approach simplifies the bidding for advertisers and increases the flexibility of providers to manage the presentation of advertisements.

The factored approach works as follows: advertisers first bid on certain topics. The topics can be determined by the providers or advertisers, and the defined categories of similar advertising targets for which advertisers compete. In this phase, the advertisers compete primarily with other advertisers interested in the same topic. Their bids do not specify the exact presentation opportunity, except in broad terms, e.g., within a three-hour window, within a certain distance of home, etc.

The provider selects the winning bidders. Their advertisements become pending presentations. The provider then looks for presentation opportunities. Good opportunities include instances such as idle time, traffic jams, the time a customer spends traveling on trains and buses, browsing the web on a PDA, reading e-mail on a cell phone, or strolling in a park. The provider manages these opportunities. Note that the customer does not always receive advertisements during such times, because the provider may want to protect the valuable attention of the customer. When an opportunity is used, there may be a variety of pending presentations from different topics. The provider can select the pending presentations based on criteria such as: time since (or time before) activity used to infer topic, previous success of similar topics in similar opportunities, size of bid, expected revenue, customer preferences, and/or previous success with the customer. In selecting the pending presentations, the provider may strive to deliver a mixture of topics and experiment to learn what the customer wants. Using criteria such as those mentioned above, the provider may rank the pending presentations, effectively causing them to compete a second time for an opportunity.

It is useful to compare embodiments of the present invention with existing keyword-search-based online advertising mechanisms. In existing keyword-search-based systems, customers enter keywords, and advertisers bid in auctions for these keywords. The winning bidders will have brief advertisements placed next to customer's search results. When customers click on these brief advertisements, the advertiser will pay the amount they have offered in the bid (this payment mechanism is usually called pay-per-click).

A number of companies are currently pursuing a mobile version of keyword-search-based advertising system, where customers access a search engine from their cell phones or mobile devices, and the search results are "localized" to the position of their search. Advertising can also be auctioned for this kind of "mobile search." Embodiments of the present invention differ from these existing systems, because the system described herein automatically analyzes the activity of mobile customers and creates opportunities for advertising even when the customer is not explicitly searching for information. This activity-based advertising is not meant to replace mobile search-based advertising, but rather to create more opportunities for advertising.

FIG. 1 illustrates an exemplary architecture for a receptive-opportunity-based advertising system, in accordance with an embodiment of the present invention. In one embodiment, an advertising system 100 includes two modules, an advertising-opportunity-identification module 102 and an auction and placement module 110. Advertising-opportunity-identification module 102 is in communication with available presentation mechanisms 104 and receives context data 106 which indicates the current context of the customer. In addition, advertising-opportunity-identification module 102 is also in communication with an activity-modeling/prediction module 108, which predicts or derives the customer's activities. Based on the received information, advertising-opportunity-identification module 102 identifies a receptive opportunity for presenting advertisements.

In one embodiment, presentation mechanisms 104 can include a variety of devices that can present an advertisement. Such devices can include a mobile phone, PDA, computer, public display, radio, TV, in-vehicle navigation system, etc.

Context data 106 can include different types of information that can be used to determine the customer's past, current, or future activities. Such information can include physical information such as time of day, day of week, weather condition, the customer's location, speed of motion, etc. Context data 106 can also include logical contents pertaining to the customer, such as the content of the customer's calendar, instant messages, and emails, history of the customer's past activities, and the customer's previous response to advertisements. In one embodiment, context data 106 can be collected by a mobile device, such as a cell phone, carried by the customer.

In one embodiment, activity-modeling/prediction module 108 uses context data 106 to derive past, current, and/or future activities associated with a customer. For example, the customer's cell phone can be equipped with a GPS. Based on pre-stored venue information and the traces of the customer's locations at different times, activity-modeling/prediction module 108 can determine that at a certain time of day the customer typically engages in a particular activity.

In one embodiment, activity-modeling/prediction module 108 analyzes context data 106 to determine the customer's current activity and predict the customer's future activity. Based on this activity information, context data 106, and information about available presentation mechanisms 104 which are in the vicinity of the customer (e.g., the customer's cell phone or a dynamic billboard close to the customer), advertising-opportunity-identification module 102 identifies suitable receptive opportunities for advertising. For example, the system might identify an activity of "eat" when a customer is waiting on a platform for a commuter train, and has not yet had dinner. Correspondingly, advertising-opportunity-identification module 102 produces an opportunity description, which can include the time, presentation mechanism, and topic (which corresponds to the identified activity) for advertisements.

Note that activity-modeling/prediction module 108 can reside on the customer's mobile device or on a remote server. Similarly, advertising-opportunity-identification module 102 can reside on a customer's mobile device or on a remote server.

Once good advertising opportunities are identified, the system then determines a relevant advertisement to present. In one embodiment, the system brokers the presentation opportunities to the appropriate advertisers by using a factored process to select advertisers for an identified opportunity. The system first allows advertisers to bid for advertising opportunities with respect to a topic. Based on the bids, the system selects a number of top bids as pending presentations for that topic. Next, when a receptive opportunity is identified, the system selects from all the pending presentations under different topics the presentations to place in the opportunity.

Note that although some pending presentations may be the highest-ranking bids in their respective topic group, the system may not select those presentations for a given advertising opportunity if the presentation's topic does not match with the opportunity. For example, when the system determines that a customer has just been to a restaurant and is now waiting for a train on his way home, it would be a good opportunity to advertise for entertainment-related products, but a poor opportunity to advertise for restaurant or food.

In the example illustrated in FIG. 1, auction and placement module 110 receives an advertisement 112, a corresponding bid 114, and corresponding placement specification 116 from an advertiser. The bidding advertiser can use placement specification 116 to request certain conditions for placing advertisement 112, such as time window, target audience, targeted activity, a customer's indeterminacy, and/or the presentation opportunity. Auction and placement module 110 then ranks the bids for each topic, and selects a number of highest bids for each topic as pending presentations.

Subsequently, after receiving an opportunity description from advertising-opportunity-identification module 102, auction and placement module 110 selects one or more pending presentations 118 to be placed during the receptive opportunity. In one embodiment, the selection of presentations to be placed during the opportunity is based on an optimization algorithm which takes into account a number of factors. For example, auction and placement module 110 chooses from the pending presentations according to one or more of:
1. Size of the advertiser's bid. This will increase the revenue to the provider, and will tend to select the more relevant advertisements for the customer.
2. Time of the opportunity relative to the topic activity. This allows the provider to lower the weighting of activities further ahead or further behind the present activity.
3. The mix of topics being presented to the customer.
4. Past experience with the customer. (This may already be included in the topic. For example, the advertisers may bid for customers whose activity indicates that they have previously accepted recommendations.)
5. Experimentation.

In general, any criteria that will help predict the success of the presentation can be used by the provider to select pending presentations. In one embodiment, the provider can also adjust the charge to an advertiser according to the quality of the receptive opportunity. For example, the advertiser bids on topic, assuming an "ideal" quality presentation, but the provider may give the advertiser a discount according to some of the criteria listed above.

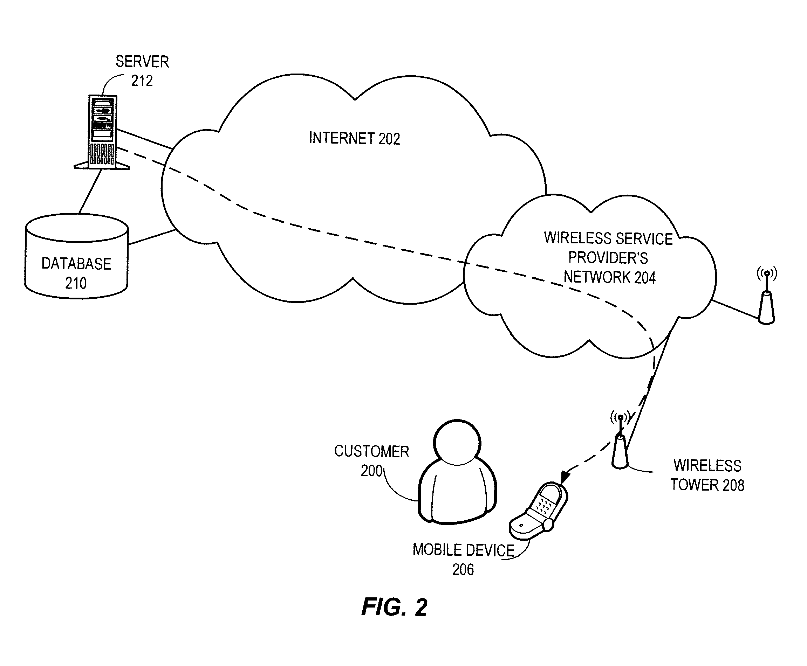

FIG. 2 presents a block diagram illustrating an exemplary mode of operation of a receptive-opportunity-based advertising system, in accordance with an embodiment of the present invention. In this example, a customer 200 uses a mobile device 206, which can be a smart phone. Mobile device 206 is in communication with server 212 via a wireless tower 208, a wireless service provider's network 204 and the Internet 202. During operation, mobile device 206 collects a set of context data, such as customer 200's calendar content, the GPS trace of the places he has been to, the current time, etc., and determines the current or future activity for customer 200. For example, mobile device 206 can detect that it is now 6 pm, customer 200 has just left the office, and that he is currently at a train station. From previously collected data, mobile device 206 also learns that customer 200 typically visits a restaurant after the train ride. Based on this information, mobile device 206 determines that the next 15 minutes would be a good receptive opportunity to present advertisements for restaurants and bars. Correspondingly, mobile device 206 communicates this opportunity description, which in one embodiment includes at least the topics and a time window, to server 212.

In response, server 212 retrieves from database 210 bids whose placement specification indicates that they are appropriate for the activity, customer indeterminacy, and/or the receptive opportunity, and selects the winning advertisements. Note that this selection process can be configured to meet the provider's needs. For example, the provider can select presentations with the highest bid for the topics associated with the opportunity description, or the presentations that are the closest match to the customer needs. In one embodiment, server 212 can also compute a discount to the advertiser based on the predicted quality of the opportunity with respect to the presentation.

Server 212 then communicates the advertisements and instructions on how to present these advertisements to mobile device 206. In one embodiment, the advertisements can be streamed video, audio, graphics, text, or a combination of above. After receiving the advertisements, mobile device 206 presents these advertisements based on the instructions. Note that other presentation mechanism can also be used. For example, the presentation mechanism can be a nearby LCD display installed in the train. The LCD display can be equipped with some communication mechanism, such as Bluetooth, to communicate with mobile device 206. During the presentation, mobile device 206 can stream the advertisements to the LCD display, so that customer 200 can view the advertisements more easily on a bigger screen.

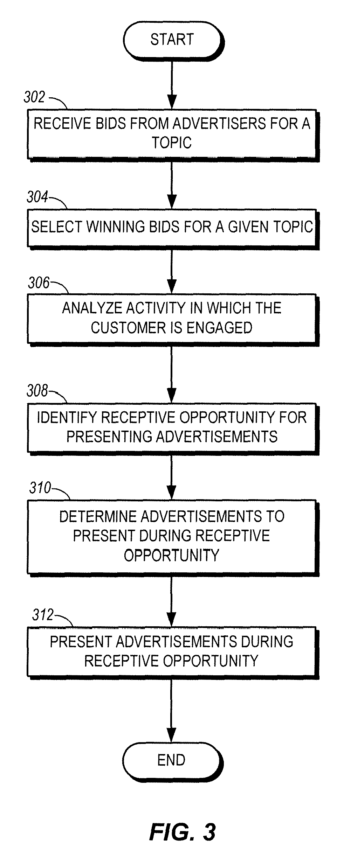

FIG. 3 presents a flowchart illustrating an exemplary process of receiving advertiser's bids, identifying a receptive opportunity, and presenting advertisements, in accordance with an embodiment of the present invention. During operation, the system first receives bids from advertisers for a given topic (operation 302). The system then selects the winning bids for that topic (operation 304). The winning bids become pending presentations. Furthermore, the system analyzes the activity in which the customer is engaged (operation 306).

Next, the system identifies a receptive opportunity for presenting advertisements (operation 308). The system further determines the advertisements to present during the identified receptive opportunity (operation 310). Subsequently, the system presents the advertisements during the receptive opportunity (operation 312).

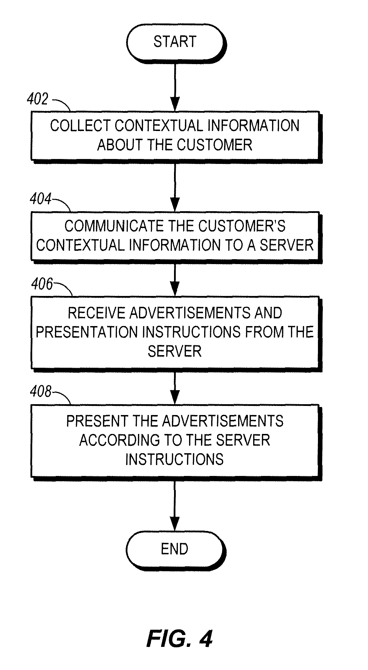

FIG. 4 presents a flowchart illustrating the operation of a customer's mobile device, in accordance with an embodiment of the present invention. During operation, the mobile device collects contextual information about the customer (operation 402). The mobile device then communicates the customer's contextual information to a server (operation 404). Note that operation 404 can be optional if the mobile device can perform activity analysis locally.

Next, the mobile device receives advertisements and presentation instructions from the server (operation 406). In response, the mobile device presents the advertisements according to the server instructions (operation 408).

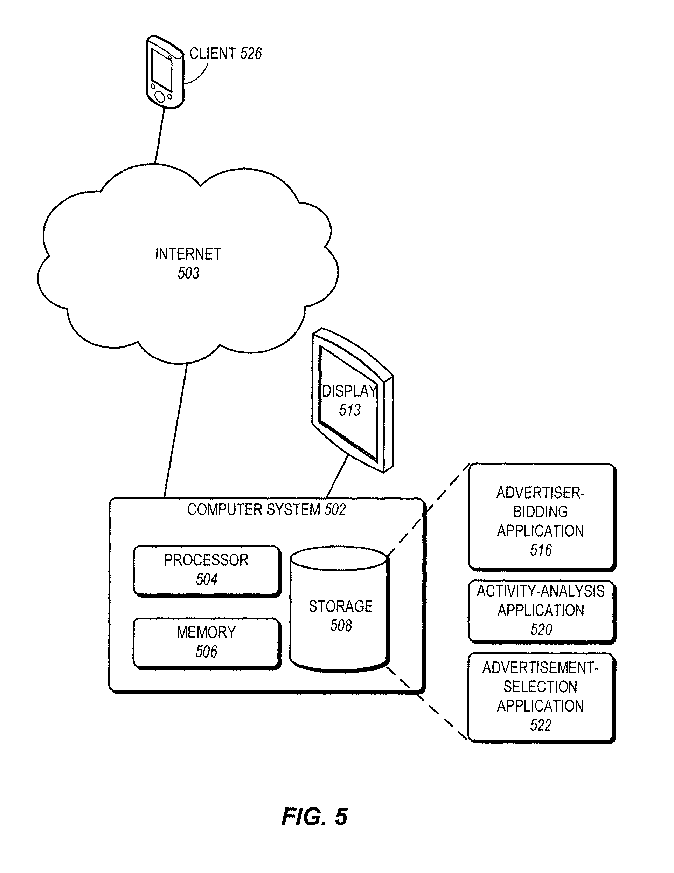

FIG. 5 illustrates an exemplary computer system that facilitates an advertising system based on receptive opportunities, in accordance with an embodiment of the present invention. In this example, computer system 502 performs the functions for a provider. Via Internet 503, computer system 502 is in communication with a client 526, which in one embodiment can be a PDA or cell phone.

Computer system 502 can include a processor 504, a memory 506, and storage device 508. In one embodiment, computer system 502 is coupled to a display 513. Storage device 508 stores an advertiser-bidding application 516, an activity-analysis application 520, and an advertisement-selection application 522. During operation, advertiser-bidding application 516, activity-analysis application 520, and advertisement-selection application 522 are loaded from storage device 508 into memory 506, and executed by processor 504. Accordingly, processor 504 performs the aforementioned functions to facilitate a receptive-opportunity-based advertising system.

The methods and processes described in the detailed description section can be embodied as code and/or data, which can be stored in a computer-readable storage medium as described above. When a computer system reads and executes the code and/or data stored on the computer-readable storage medium, the computer system perform the methods and processes embodied as data structures and code and stored within the computer-readable storage medium.

Furthermore, the methods and processes described below can be included in hardware modules. For example, the hardware modules can include, but are not limited to, application-specific integrated circuit (ASIC) chips, field programmable gate arrays (FPGAs), and other programmable-logic devices now known or later developed. When the hardware modules are activated, the hardware modules perform the methods and processes included within the hardware modules.

## Claims

1. A computer implemented method for facilitating presentation of activity-based advertising based on receptive opportunities, the method comprising:
identifying a number of topics;
receiving a number of advertisements from advertisers, wherein a respective advertisement is associated with a topic;
for a respective topic, determining a number of candidate advertisements associated with that topic to be pending presentations;
analyzing an activity in which a customer is engaged;
identifying a receptive opportunity to present one or more advertisements to the customer based on the activity analysis;
determining among the pending presentations one or more advertisements to present to the customer during the identified receptive opportunity; and
presenting the determined advertisements to the customer during the opportunity period.

2. The method of claim 1, wherein determining the candidate advertisements to be pending presentations comprises receiving a number of bids from corresponding advertisers and selecting a predetermined number of top-ranking bids.

3. The method of claim 1, wherein identifying the receptive opportunity comprises evaluating one or more of the following:
time of day;
day of week;
weather condition;
the customer's location;
speed of the customer's motion;
content of the customer's calendar, messages, and emails;
history of the customer's activities; and
the customer's previous response to advertisements.

4. The method of claim 1, wherein determining the advertisements to be presented to the customer during the receptive opportunity comprises evaluating one or more of the following factors:
the bid amount offered by the advertiser who provides a respective advertisement;
time of the receptive opportunity relative to the time associated with the topic corresponding to a respective advertisement;
the mix of different topics corresponding to the advertisements to be presented; and
the customer's past experience with a respective advertisement.

5. The method of claim 1, wherein presenting the determined advertisements to the customer comprises presenting an advertisement in audio, visual, or textual format on one or more of:
a mobile phone;
a personal digital assistant (PDA);
a computer;
a public display;
a navigation system; and
an audio system.

6. The method of claim 1, further comprising charging an advertiser whose advertisement is presented during the receptive opportunity based on the quality of that receptive opportunity.

7. The method of claim 1, further comprising downloading the advertisements to be presented from a server.

8. A computer-readable medium storing instructions which when executed by a computer cause the computer to perform a method for facilitating presentation of activity-based advertising based on receptive opportunities, the method comprising:
identifying a number of topics;
receiving a number of advertisements from advertisers, wherein a respective advertisement is associated with a topic;
for a respective topic, determining a number of candidate advertisements associated with that topic to be pending presentations;
analyzing an activity in which a customer is engaged;
identifying a receptive opportunity to present one or more advertisements to the customer based on the activity analysis;
determining among the pending presentations one or more advertisements to present to the customer during the identified receptive opportunity; and
presenting the determined advertisements to the customer during the opportunity period.

9. The computer-readable medium of claim 8, wherein determining the candidate advertisements to be pending presentations comprises receiving a number of bids from corresponding advertisers and selecting a predetermined number of top-ranking bids.

10. The computer-readable medium of claim 8, wherein identifying the receptive opportunity comprises evaluating one or more of the following:
time of day;
day of week;
weather condition;
the customer's location;
speed of the customer's motion;
content of the customer's calendar, messages, and emails;
history of the customer's activities; and
the customer's previous response to advertisements.

11. The computer-readable medium of claim 8, wherein determining the advertisements to be presented to the customer during the receptive opportunity comprises evaluating one or more of the following factors:
the bid amount offered by the advertiser who provides a respective advertisement;
time of the receptive opportunity relative to the time associated with the topic corresponding to a respective advertisement;
the mix of different topics corresponding to the advertisements to be presented; and
the customer's past experience with a respective advertisement.

12. The computer-readable medium of claim 8, wherein presenting the determined advertisements to the customer comprises presenting an advertisement in audio, visual, or textual format on one or more of:
a mobile phone;
a personal digital assistant (PDA);
a computer;
a public display;
a navigation system; and
an audio system.

13. The computer-readable medium of claim 8, further comprising charging an advertiser whose advertisement is presented during the receptive opportunity based on the quality of that receptive opportunity.

14. The computer-readable medium of claim 8, wherein the method further comprises downloading the advertisements to be presented from a server.

15. A computer system that facilitates presentation of activity-based advertising based on receptive opportunities, the computer system comprising:
a processor;
a memory coupled to the processor;
a topic-identification mechanism configured to identify a number of topics;
a receiving mechanism configured to receive a number of advertisements from advertisers, wherein a respective advertisement is associated with a topic;
a determination mechanism configured to determine, for a respective topic, a number of candidate advertisements associated with that topic to be pending presentations;
an activity-analysis mechanism configured to analyze an activity in which a customer is engaged;
an opportunity-identification mechanism configured to identify a receptive opportunity to present one or more advertisements to the customer based on the activity analysis;
a presentation-selection mechanism configured to determine among the pending presentations one or more advertisements to present to the customer during the identified receptive opportunity; and
a communication mechanism configured to communicate the advertisements to present to the customer during the receptive opportunity to a presentation mechanism.
